# EUROPEAN PATENT SPECIFICATION

(11) **EP 2 973 838 B1**
(45) Date of publication and mention of the grant of the patent: **24.04.2019**
(21) Application number: 14779822.7
(22) Date of filing: 11.03.2014
(51) Int. Cl.: H01M 10/054, H01M 10/39, H01M 4/38, H01M 4/58, H01M 4/485, H01M 4/505, H01M 4/525

(54) **LOW TEMPERATURE SECONDARY CELL WITH SODIUM INTERCALATION ELECTRODE**
NIEDRIGTEMPERATUR-SEKUNDÄRZELLE MIT EINER NATRIUMINTERKALATIONSELEKTRODE
CELLULE SECONDAIRE BASSE TEMPÉRATURE AVEC ÉLECTRODE D'INTERCALATION DE SODIUM

(30) Priority: 13.03.2013 US 201361779857 P
(43) Date of publication of application: 20.01.2016
(73) Proprietor: Field Upgrading USA, Inc., Broomfield, CO 80020 (US)
(72) Inventor: BHAVARAJU, Sai, West Jordan, Utah 84088 (US); ROBINS, Mathew, Saratoga Springs, Utah 84045 (US)
(74) Representative: HGF Limited
(86) International application number: PCT/US2014/023698
(87) International publication number: WO 2014/164883

(56) References cited:
- EP-A1- 2 485 317
- WO-A1-2012/114951
- WO-A1-2012/117916
- WO-A1-2012/132813
- WO-A1-2012/132813
- JP-A- 2009 009 933
- US-A1- 2008 268 327
- US-A1- 2012 219 833
- US-A1- 2012 219 833

## Description

### FIELD OF THE INVENTION

The present invention relates in general to batteries. More particularly, the present invention provides a molten sodium-based secondary cell (or rechargeable battery) that operates at a temperature between 107° Celsius ("C") and 150° C. The disclosed secondary cell utilizes a sodium ion conductive electrolyte membrane separating the molten sodium negative electrode from a sodium intercalation electrode in a molten sodium-FSA (sodium-bis(fluorosulfonyl)amide) electrolyte.

### BACKGROUND OF THE INVENTION

Batteries are known devices that are used to store and release electrical energy for a variety of uses. In order to produce electrical energy, batteries typically convert chemical energy directly into electrical energy. Generally, a single battery includes one or more galvanic cells, wherein each of the cells is made of two half-cells that are electrically isolated except through an external circuit. During discharge, electrochemical reduction occurs at the cell's positive electrode, while electrochemical oxidation occurs at the cell's negative electrode. While the positive electrode and the negative electrode in the cell do not physically touch each other, they are generally chemically connected by at least one (or more) ionically conductive and electrically insulative electrolyte(s), which can either be in a solid or a liquid state, or in combination. When an external circuit, or a load, is connected to a terminal that is connected to the negative electrode and to a terminal that is connected to the positive electrode, the battery drives electrons through the external circuit, while ions migrate through the electrolyte.

Batteries can be classified in a variety of manners. For example, batteries that are completely discharged only once are often referred to as primary batteries or primary cells. In contrast, batteries that can be discharged and recharged more than once are often referred to as secondary batteries or secondary cells. The ability of a cell or battery to be charged and discharged multiple times depends on the Faradaic efficiency of each charge and discharge cycle.

While rechargeable batteries based on sodium can comprise a variety of materials and designs, most, if not all, sodium batteries requiring a high Faradaic efficiency employ a solid primary electrolyte separator, such as a solid ceramic primary electrolyte membrane. The principal advantage of using a solid ceramic primary electrolyte membrane is that the Faradaic efficiency of the resulting cell approaches 100%. Indeed, in almost all other cell designs electrode solutions in the cell are able to intermix over time and, thereby, cause a drop in Faradaic efficiency and loss of battery capacity.

The primary electrolyte separators used in sodium batteries that require a high Faradaic efficiency often consist of ionically conducting polymers, porous materials infiltrated with ionically conducting liquids or gels, or dense ceramics. In this regard, most, if not all, rechargeable sodium batteries that are presently available for commercial applications comprise a molten sodium metal negative electrode, a sodium β"-alumina ceramic electrolyte separator, and a molten positive electrode, which may include a composite of molten sulfur and carbon (called a sodium/sulfur cell), or molten NiCl₂, NaCl, and NaAlCl₄ (called a ZEBRA cell). Because these conventional high temperature sodium-based rechargeable batteries have relatively high specific energy densities and only modest power densities, such rechargeable batteries are typically used in certain specialized applications that require high specific energy densities where high power densities are typically not encountered, such as in stationary storage and uninterruptable power supplies.

Despite the beneficial characteristics associated with some conventional sodium-based rechargeable batteries, such batteries may have significant shortcomings. In one example, because the sodium β"-alumina ceramic electrolyte separator is typically more conductive and is better wetted by molten sodium at a temperature in excess of about 270° C and/or because the molten positive electrode typically requires relatively high temperatures (e.g., temperatures above about 170° or 180° C) to remain molten, many conventional sodium-based rechargeable batteries operate at temperatures higher than about 270° C and are subject to significant thermal management problems and thermal sealing issues. For example, some sodium-based rechargeable batteries may have difficulty dissipating heat from the batteries or maintaining the negative electrode and the positive electrode at the relatively high operating temperatures. In another example, the relatively high operating temperatures of some sodium-based batteries can create significant safety issues. In still another example, the relatively high operating temperatures of some sodium-based batteries require their components to be resistant to, and operable at, such high temperatures. Accordingly, such components can be relatively expensive. In yet another example, because it may require a relatively large amount of energy to heat some conventional sodium-based batteries to the relatively high operating temperatures, such batteries can be expensive to operate and energy inefficient.

Thus, while molten sodium-based rechargeable batteries are available, challenges with such batteries also exist, including those previously mentioned. Accordingly, it would be an improvement in the art to augment or even replace certain conventional molten sodium-based rechargeable batteries with other molten sodium-based rechargeable batteries.

WO 2012117916 A1 discloses molten salt used as the electrolyte of a molten salt battery, where the molten salt is a mixed salt of: a salt having an Na ion as the cation and an ion represented by [R₁-SO₂-N-SO₂-R₂]- such as an FSA ion as the anion; and a salt having another alkali metal or alkaline earth metal as the cation. The active material of a cathode is a metal oxide represented by NaₓM1_{y}M2_{1-y}O₂ (where M1 is Fe or Ni, M2 is Mn or Ti, 0 < x ≤ 1, and 0 < y < 1). The active material of the cathode (1), for example, is Na_{2/3}Fe_{1/3}Mn_{2/3}O₂.

EP 2485317 discloses a battery including a positive electrode, a negative electrode mainly composed of sodium, and an electrolyte provided between the positive electrode and the negative electrode, the electrolyte being molten salt containing anions expressed with chemical formula R₁-SO₂-N-SO₂-R₂ cations of metal, R₁ and R₂ in the chemical formula above independently representing fluorine atom or fluoroalkyl group, the cations of metal containing at least one of at least one type of cations of alkali metal and at least one type of cation of alkaline-earth metal. An energy system including the battery is also provided.

US 2012219833 discloses a molten sodium secondary cell. In some cases, the secondary cell includes a sodium metal negative electrode, a positive electrode compartment that includes a positive electrode disposed in a liquid positive electrode solution, and a sodium ion conductive electrolyte membrane that separates the negative electrode from the positive electrode solution. In such cases, the electrolyte membrane can comprise any suitable material, including, without limitation, a NaSICON-type membrane. Furthermore, in such cases, the liquid positive electrode solution can comprise any suitable positive electrode solution, including, but not limited to, an aqueous sodium hydroxide solution. Generally, when the cell functions, the sodium negative electrode is molten and in contact with the electrolyte membrane. Additionally, the cell is functional at an operating temperature between about 100 °C and about 170 °C. Indeed, in some instances, the molten sodium secondary cell is functional between about 110 °C and about 130 °C.

WO 2012132813 discloses an additive for sodium ion secondary batteries which contains a compound that is composed of a saturated cyclic carbonate having a fluoro group and/or a chain carbonate having a fluoro group. This sodium ion secondary battery is provided with: a nonaqueous electrolyte solution which contains the additive for sodium ion secondary batteries and a nonaqueous solvent that is composed of a saturated cyclic carbonate or a nonaqueous solvent that is composed of a saturated cyclic carbonate and a chain carbonate; a positive electrode and a negative electrode which has a coating film on the surface, said coating film being composed of a composite material containing carbon, oxygen, fluorine and sodium, and which contains a negative electrode active material that is composed of hard carbon.

### BRIEF SUMMARY OF THE INVENTION

In a first aspect the present invention provides a molten sodium secondary cell comprising: a negative electrode compartment comprising a sodium metal negative electrode, which electrochemically oxidizes to release sodium ions during discharge and electrochemically reduces sodium ions to sodium metal during recharging; a positive electrode compartment comprising a positive electrode disposed in a molten positive electrolyte consisting of NaFSA (sodium bis(fluorosulfonyl)amide), wherein the positive electrode comprises a sodium intercalation electrode; and a sodium ion conductive electrolyte membrane that separates the sodium metal negative electrode from the molten positive electrolyte, wherein the sodium metal negative electrode is molten and in contact with the conductive electrolyte membrane as the cell operates; wherein the sodium ion conductive electrolyte membrane comprises a NaSICON-type material, and wherein the cell functions at an operating temperature between 107° C and 150° C.

In a second aspect, the present invention provides a method for providing electrical potential from a molten sodium secondary cell of the invention, the method comprising: providing a molten sodium secondary cell, comprising: a sodium metal negative electrode, which electrochemically oxidizes to release sodium ions during discharge and electrochemically reduces sodium ions to sodium metal during recharging; a positive electrode compartment comprising a positive electrode disposed in a molten positive electrolyte consisting of NaFSA (sodium bis(fluorosulfonyl)amide), wherein the positive electrode comprises a sodium intercalation electrode; and a sodium ion conductive electrolyte membrane that separates the sodium metal negative electrode from the molten positive electrolyte; wherein the sodium ion conductive electrolyte membrane comprises a NaSICON-type material; heating the sodium metal negative electrode to a temperature so that the sodium metal negative electrode is molten and in contact with the sodium ion conductive electrolyte membrane and so that the sodium metal negative electrode oxidizes to release the sodium ions and allows the cell to discharge electricity; and maintaining the temperature of the sodium metal negative electrode between 107 and 150° C.

Generally, the sodium negative electrode comprises an amount of sodium metal. In this regard, as the cell operates, the sodium negative electrode is in a liquid or molten state. While the sodium negative electrode may comprise any suitable type of sodium, including without limitation, a pure sample of sodium or a sodium alloy, in some non-limiting implementations, the negative electrode comprises a sodium sample that is substantially pure.

The positive electrode comprises a sodium intercalation material. Non-limiting examples of sodium intercalation materials include NaₓMnO₂, NaₓCrO₂, NaₓNiO, and NaₓFe_{y}(PO₄), where x, y, and z are between 0 and about 4. In one embodiment, the sodium intercalation materials include NaₓMnO₂, NaₓCrCO₂, NaₓNiO where x is between 0 and 1.

The positive electrode may further comprise a current collector configured in the form of a wire, felt, mesh, plate, tube, foam, or other suitable electrode configuration.

The positive electrode compartment comprises a molten sodium-FSA (sodium-bis(fluorosulfonyl)amide) electrolyte that is capable of conducting sodium ions to and from the electrolyte membrane and that otherwise allows the cell to function as intended. Na-FSA has the following structure: 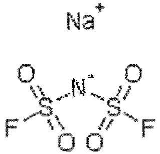 Na-FSA has a melting point of 107° C, such that it is molten at typical operating temperatures of the molten sodium secondary cell. Na-FSA has a conductivity in the range of about 50-100 mS/cm.

The sodium ion conductive electrolyte membrane comprises a NaSICON-type membrane, the membrane can comprise any suitable kind of NaSICON-type membrane, including, without limitation, a composite NaSICON membrane. In this regard, and by way of non-limiting illustration, the membrane can comprise any known or novel composite NaSICON membrane that includes a dense NaSICON layer and a porous NaSICON layer.

The described secondary cell operates at an operating temperature of between 107° C and 150° C. Indeed, in some non-limiting implementations, the cell functions (e.g., is discharged or recharged) while the temperature of the cell is at least as high as a temperature selected from 107° C, 110° C, 120° C, and 130° C. In some non-limiting implementations, the cell functions at a temperature less than a temperature selected from 150° C and 130° C. Indeed, in some non-limiting implementations, as the cell functions, the temperature of the negative electrode is 120° C ± 10° C. As the cell functions, the temperature of the positive electrode is sufficient to melt the sodium-FSA electrolyte. Such temperatures will typically be above 107° C. The temperature of the positive electrode may be 120° C ± 10° C. In some embodiments, the cell is pressurized ranging from about 1 psi to about 30 psi. In some embodiments, the cell is pressurized ranging from about 1 psi to about 30 psi. In one embodiment, the cell may be pressurized in a range of about 10 psi to about 15 psi.

These features and advantages of the present invention will become more fully apparent from the following description and appended claims, or may be learned by the practice of the invention as set forth hereinafter.

### BRIEF DESCRIPTION OF THE SEVERAL DRAWINGS

In order that the manner in which the above-recited and other features and advantages of the invention are obtained and will be readily understood, a more particular description of the invention briefly described above will be rendered by reference to specific embodiments thereof that are illustrated in the appended drawings. Understanding that the drawings are not made to scale, depict only some representative embodiments of the invention, and are not therefore to be considered to be limiting of its scope, the invention will be described and explained with additional specificity and detail through the use of the accompanying drawings in which:
Figure 1 depicts a schematic diagram of a representative embodiment of a molten sodium secondary cell, wherein the cell is in the process of being discharged.
Figure 2 depicts a schematic diagram of a representative embodiment of the molten sodium secondary cell, wherein the cell is in the process of being recharged.

### DETAILED DESCRIPTION OF THE INVENTION

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment. Additionally, while the following description refers to several embodiments and examples of the various components and aspects of the described invention, all of the described embodiments and examples are to be considered, in all respects, as illustrative only and not as being limiting in any manner.

Furthermore, the described features, structures, or characteristics of the invention may be combined in any suitable manner in one or more embodiments. In the following description, numerous specific details are provided, such as examples of suitable sodium negative electrodes, positive electrode materials, liquid positive electrode solutions, sodium ion conductive electrolyte membrane, etc., to provide a thorough understanding of embodiments of the invention. One having ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

As stated above, secondary cells can be discharged and recharged and this specification describes cell arrangements and methods for both states. Although the term "recharging" in its various forms implies a second charging, one of skill in the art will understand that discussions regarding recharging would be valid for, and applicable to, the first or initial charge, and vice versa. Thus, for the purposes of this specification, the terms "recharge," "recharged" and "rechargeable" shall be interchangeable with the terms "charge," "charged" and "chargeable" respectively.

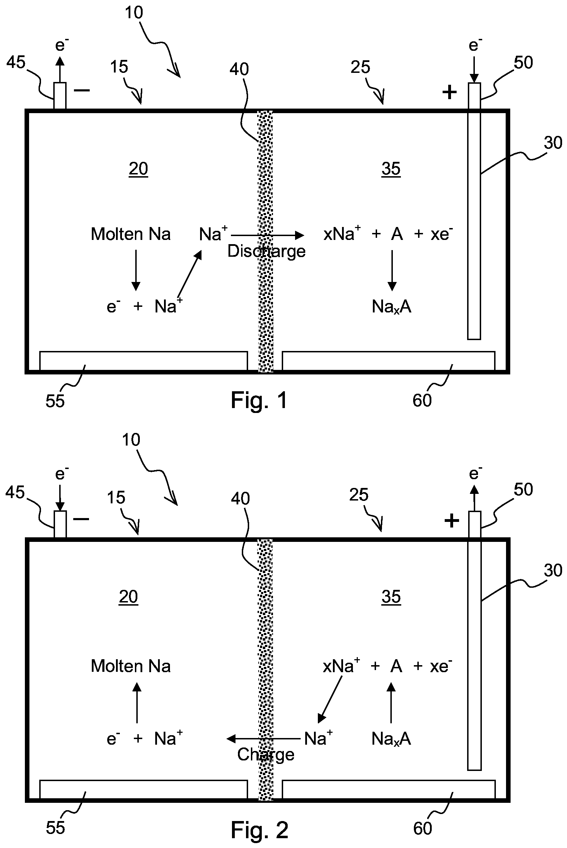

The present invention provides a molten sodium secondary cell that functions at an operating temperature between 107° C and 150° C. While the described cell can comprise any suitable component, Figure 1 shows a representative embodiment in which the molten sodium secondary cell 10 comprises a negative electrode compartment 15 that includes a sodium metal negative electrode 20 and a positive electrode compartment 25 that comprises a positive electrode. The positive electrode includes a current collector 30 and a sodium intercalation electrode material "A" disposed in a molten sodium-FSA (sodium-bis(fluorosulfonyl)amide) electrolyte 35. A sodium ion conductive electrolyte membrane 40 (NaSICON-type material) separates the negative electrode from the positive electrolyte and a first terminal 45 from a second terminal 50. To provide a better understanding of the described cell 10, a brief description of how the cell functions is provided below. Following this discussion, each of the cell's components shown in Figure 1 is discussed in more detail.

Turning now to the manner in which the molten sodium secondary cell 10 functions, the cell can function in virtually any suitable manner. In one example, Figure 1 illustrates that as the cell 10 is discharged and electrons (e⁻) flow from the negative electrode 20 (*e.g.,* via the first terminal 45), sodium is oxidized from the negative electrode 20 to form sodium ions (Na⁺). Figure 1 shows that these sodium ions are respectively transported from the sodium negative electrode 20, through the sodium ion conductive membrane 40, and to the positive electrolyte 35.

In a contrasting example, Figure 2 shows that as the secondary cell 10 is recharged and electrons (e⁻) flow into the sodium negative electrode 20 from an external power source (not shown), such as a recharger, the chemical reactions that occurred when the cell 10 was discharged (as shown in Figure 1) are reversed. Specifically, Figure 2 shows that as the cell 10 is recharged, sodium ions (Na⁺) are respectively transported from the positive electrolyte 35, through the electrolyte membrane 40, and to the negative electrode 20, where the sodium ions are reduced to form sodium metal (Na).

Referring now to the various components of the cell 10, the cell, as mentioned above, comprises a negative electrode compartment 15 and a positive electrode compartment 25. In this regard, the two compartments can be any suitable shape and have any other suitable characteristic that allows the cell 10 to function as intended. By way of example, the negative electrode and the positive electrode compartments can be tubular, rectangular, or be any other suitable shape. Furthermore, the two compartments can have any suitable spatial relationship with respect to each other. For instance, while Figure 2 shows that the negative electrode compartment 15 and the positive electrode compartment 25 can be adjacent to each other, in other embodiments (not shown), one compartment (*e.g*., the negative electrode compartment) is disposed, at least partially, in the other compartment (*e.g*., the positive electrode compartment), while the contents of the two compartments remain separated by the electrolyte membrane 40 and any other compartmental walls.

With respect to the negative electrode 20, the cell 10 can comprise any suitable sodium negative electrode 20 that allows the cell 10 to function (*e.g*., be discharged and recharged) as intended. Some examples of suitable sodium negative electrode materials include, but are not limited to, a sodium sample that is substantially pure and a sodium alloy comprising any other suitable sodium-containing negative electrode material. In certain embodiments, however, the negative electrode comprises or consists of an amount of sodium that is substantially pure. In such embodiments, because the melting point of pure sodium is around 98° C, the sodium negative electrode will become molten above that temperature.

With respect to the positive current collector 30, the positive electrode compartment 25 can comprise any suitable positive electrode that allows the cell to be charged and discharged as intended. For instance, the positive electrode can comprise virtually any current collector 30 in combination with a sodium intercalation material, shown generically as "A" in Figs. 1 and 2, in a molten sodium-FSA electrolyte 35.

In some embodiments, the positive current collector may comprise a wire, felt, plate, tube, mesh, foam, and/or other suitable current collector configuration. In some non-limiting embodiments, the sodium intercalation material ("A") is selected from NaₓMnO₂, NaₓCrO₂, NaₓNiO, and NaₓFe_{y}(PO₄)_{z} where x, y, and z are between 0 and about 4. In one embodiment, the sodium intercalation materials include NaₓMnO₂, NaₓCrO₂, NaₓNiO where x is between 0 and 1.

In some non-limiting embodiments, the reactions that occur at the negative electrode and at the positive electrode and the overall reaction as the cell 10 is discharged may occur as illustrated below:
Negative electrode xNa ↔ xNa⁺ + xe⁻
Positive electrode A + xe⁻ ↔ A^{-x}
Overall xNa + A ↔ NaₓA

Accordingly, some embodiments of the describe cell 10, at least theoretically, are capable of producing about 3.2V ± 0.5V at standard temperature and pressure.

Moreover, some examples of overall reactions that may occur during the discharging and charging of a cell in which the positive electrode 30 comprises a NaₓMnO₂ intercalation material, the negative electrode 20 comprises sodium, and the positive electrolyte 35 comprises molten sodium-FSA, are shown below:
(Discharge) xNa + MnO2 ↔ NaₓMnO₂
(Charge) NaₓMnO₂ → MnO₂ + xNa

With respect now to the molten sodium-FSA positive electrolyte 35, the positive electrolyte has been found to have good sodium ion conductivity that allows the cell 10 to function as intended. It is intended for the positive electrolyte to have a higher sodium ion conductivity than the electrolyte membrane 40. The molten sodium-FSA conductivity ranges between about 50 mS/cm and 100 mS/cm. The NaSICON conductivity may range between about 20 and about 50 mS/cm. The NaSICON conductivity may range between about 30 and about 45 mS/cm.

With regards now to the sodium ion conductive electrolyte membrane 40, the membrane comprises a NaSICON-type (sodium Super Ion CONductive) material. In such embodiments, the NaSICON-type material may comprise any known or novel NaSICON-type material that is suitable for use with the described cell 10. Some non-limiting examples of NaSICON-type compositions include, but are not limited to, Na₃Zr₂Si₂PO₁₂, Na₁₊ₓSiₓZr₂P₃₋ₓO₁₂ (where x is selected from 1.6 to 2.4), Y-doped NaSICON (Na_{1+x+y}Zr_{2-y}Y_{y}SiₓP₃₋ₓO₁₂, Na₁₊ₓZr_{2-y}Y_{y} SiₓP₃₋ₓO_{12-y} (where x = 2, y = 0.12), and Fe-doped NaSICON (Na₃Zr₂/₃Fe₄/₃P₃O₁₂). Indeed, in certain embodiments, the NaSICON-type membrane comprises Na₃Si₂Zr₂PO₁₂. In still other embodiments, the NaSICON-type membrane comprises known or novel composite, cermet-supported NaSICON membrane. In such embodiments, the composite NaSICON membrane can comprise any suitable component, including, without limitation, a porous NaSICON-cermet layer that comprises NiO/NaSICON or any other suitable cermet layer, and a dense NaSICON layer. In yet other embodiments, the NaSICON membrane comprises a monoclinic ceramic.

The NaSICON-type material may provide the cell 10 with several beneficial characteristics. In one example, because such membranes selectively transport sodium ions but do not allow the negative electrode 20 and the positive electrolyte 35 to mix, such membranes can help the cell to have minimal capacity fade and to have a relatively stable shelf life at ambient temperatures.

With reference now to the terminals 45 and 50, the cell 10 can comprise any suitable terminals that are capable of electrically connecting the cell with an external circuit, including without limitation, to one or more cells. In this regard, the terminals can comprise any suitable material and any suitable shape of any suitable size.

In addition to the aforementioned components, the cell 10 can optionally comprise any other suitable component. By way of non-limiting illustration Figure 2 shows an embodiment in which the cell 10 comprises a heat management system 55, 60. Independent heat management systems may be associated with the negative electrode and positive electrode compartments. Alternatively, a single heat management system may be disposed in only one compartment. In such embodiments, the cell can comprise any suitable type of heat management system that is capable of maintaining the cell within a suitable operating temperature range. Some examples of such heat management systems include, but are not limited to, a heater, one or more temperature sensors, and appropriate temperature control circuitry.

The described cell 10 functions at an operating temperature of between 107° C and 150° C. In other words, as the cell is discharged and/or recharged, the sodium negative electrode and the positive electrolyte has a temperature of between 107° C and 150° C. The negative and positive electrode compartments may operate at the same or different temperatures. Indeed, in some embodiments, the cell functions at an operating temperature that is as high as a temperature selected from 120° C, 130° C, and 150° C. Moreover, in such embodiments, as the cell functions, the temperature of the negative and/or positive electrode compartments can be as low as a temperature selected from 120° C, 115° C, 110° C, and 107° C. Indeed, in some embodiments, as the cell functions, the temperature of the negative and/or positive electrode compartments may be between 107° C and 150° C. In other embodiments, the cell functions at a temperature between 110° C and 130° C. In yet other embodiments, however, as the cell functions, the temperature of the negative and/or positive electrode compartments is 120° C ± 10° C.

In addition to the aforementioned benefits of the cell 10, the described cell may have several other beneficial characteristics. By way of example, by being able to operate in a temperature range between 107° and 150° C, the cell 10 may operate in a temperature range that is significantly lower the operating temperature of certain conventional molten sodium rechargeable batteries. Accordingly, the described cell may require less energy to heat and/or dissipate heat from the cell as the cell functions, may be less dangerous use or handle, and may be more environmentally friendly.

## Claims

1. A molten sodium secondary cell, comprising:
a negative electrode compartment comprising a sodium metal negative electrode, which electrochemically oxidizes to release sodium ions during discharge and electrochemically reduces sodium ions to sodium metal during recharging;
a positive electrode compartment comprising a positive electrode disposed in a molten positive electrolyte consisting of NaFSA (sodium bis(fluorosulfonyl)amide),
wherein the positive electrode comprises a sodium intercalation electrode; and
a sodium ion conductive electrolyte membrane that separates the sodium metal negative electrode from the molten positive electrolyte,
wherein the sodium metal negative electrode is molten and in contact with the conductive electrolyte membrane as the cell operates;
wherein the sodium ion conductive electrolyte membrane comprises a NaSICON-type material, and
wherein the cell functions at an operating temperature between 107° C and 150° C.

2. The secondary cell of claim 1,
wherein the NaSICON-type material comprises a composite membrane having a porous layer and a dense functional layer.

3. The secondary cell of any preceding claim, wherein the cell functions when the operating temperature is between 110° C and 130° C.

4. The secondary cell of any preceding claim, wherein the sodium intercalation electrode comprises NaₓMnO₂ wherein x is between 0 and 4, and/or
wherein the sodium intercalation electrode comprises NaₓCrO₂ wherein x is between 0 and 4.

5. The secondary cell of any preceding claim, wherein the sodium intercalation electrode comprises NaₓNiO or NaₓFe_{y}(PO₄)_{z}, wherein x is between 0 and 4, y is between 0 and 4, and z is between 0 and 4.

6. The secondary cell of any preceding claim, further comprising a heat management system to control the operating temperature of the cell.

7. The secondary cell of any preceding claim, further comprising a heat management system disposed in the negative electrode compartment to control the operating temperature of the negative electrode compartment, and/or
further comprising a heat management system disposed in the positive electrode compartment to control the operating temperature of the positive electrode compartment.

8. A method for providing electrical potential from a molten sodium secondary cell of claims 1-7, the method comprising:
providing a molten sodium secondary cell, comprising:
a sodium metal negative electrode, which electrochemically oxidizes to release sodium ions during discharge and electrochemically reduces sodium ions to sodium metal during recharging;
a positive electrode compartment comprising a positive electrode disposed in a molten positive electrolyte consisting of NaFSA (sodium bis(fluorosulfonyl)amide), wherein the positive electrode comprises a sodium intercalation electrode; and
a sodium ion conductive electrolyte membrane that separates the sodium metal negative electrode from the molten positive electrolyte; wherein the sodium ion conductive electrolyte membrane comprises a NaSICON-type material;
heating the sodium metal negative electrode to a temperature so that the sodium metal negative electrode is molten and in contact with the sodium ion conductive electrolyte membrane and so that the sodium metal negative electrode oxidizes to release the sodium ions and allows the cell to discharge electricity; and
maintaining the temperature of the sodium metal negative electrode between 107 and 150° C.

9. The method of claim 8, further comprising maintaining the temperature of the sodium metal negative electrode between 110 and 130° C.

10. The method of claim 7, further comprising recharging the cell by passing an electrical potential between the sodium metal negative electrode and the positive electrode to cause the sodium negative electrode to electrochemically reduce sodium ions to sodium metal.

11. The method of claim 7, wherein the sodium intercalation electrode comprises NaₓMnO₂ wherein x is between 0 and 4.

12. The method of claim 7, wherein the sodium intercalation electrode comprises NaₓCrO₂ wherein x is between 0 and 4.

13. The method of claim 7, wherein the sodium intercalation electrode comprises NaₓNiO or NaₓFe_{y}(PO₄)_{z}, wherein x is between 0 and 4, y is between 0 and 4, and z is between 0 and 4.

14. The method of claim 7, wherein the molten sodium secondary cell further comprises a heat management system.

## Patentansprüche

1. Sekundärzelle aus geschmolzenem Natrium, umfassend:
einen negativen Elektrodenraum, umfassend eine negative Elektrode aus Natriummetall, die elektrochemisch oxidiert, um während einer Entladung Natriumionen freizusetzen, und die während einer Wiederaufladung Natriumionen elektrochemisch zu Natriummetall reduziert;
einen positiven Elektrodenraum, umfassend eine positive Elektrode, die in einem geschmolzenen positiven Elektrolyten angeordnet ist, der aus NaFSA (Natrium-bis(fluorsulfonyl)amid) besteht, wobei die positive Elektrode eine Natriuminterkalationselektrode umfasst; und eine Natriumion-leitende Elektrolytmembran, die die negative Natriummetallelektrode von dem geschmolzenen positiven Elektrolyten trennt,
wobei die negative Natriummetallelektrode geschmolzen wird und in Kontakt mit der leitenden Elektrolytmembran ist, während die Zelle in Betrieb ist;
wobei die Natriumion-leitende Elektrolytmembran ein Material vom Typ NaSICON umfasst, und wobei die Zelle bei einer Betriebstemperatur zwischen 107 °C und 150 °C funktioniert.

2. Sekundärzelle nach Anspruch 1,
wobei das Material vom Typ NaSICON eine Verbundmembran mit einer porösen Schicht und einer dichten Funktionsschicht umfasst.

3. Sekundärzelle nach einem vorherigen Anspruch, wobei die Zelle funktioniert, wenn die Betriebstemperatur zwischen 110 °C und 130 °C ist.

4. Die Sekundärzelle nach einem vorherigen Anspruch, wobei die Natriuminterkalationselektrode NaₓMnO₂ umfasst, wobei x zwischen 0 und 4 ist, und/oder wobei die Natriumeinlagerungselektrode NaₓCrO₂ umfasst, wobei x zwischen 0 und 4 ist.

5. Sekundärzelle nach einem vorherigen Anspruch, wobei die Natriuminterkalationselektrode NaₓNiO oder NaₓFe_{y}(PO₄)_{z} umfasst, wobei x zwischen 0 und 4 ist, y zwischen 0 und 4 ist und z zwischen 0 und 4 ist.

6. Sekundärzelle nach einem vorherigen Anspruch, ferner umfassend ein Wärmemanagementsystem zum Regulieren der Betriebstemperatur der Zelle.

7. Sekundärzelle nach einem vorherigen Anspruch, ferner umfassend ein Wärmemanagementsystem, das in dem negativen Elektrodenraum angeordnet ist, um die Betriebstemperatur des negativen Elektrodenraums zu regulieren, und/oder ferner umfassend ein Wärmemanagementsystem, das in dem positiven Elektrodenraum angeordnet ist, um die Betriebstemperatur des positiven Elektrodenraums zu regulieren.

8. Verfahren zum Bereitstellen eines elektrischen Potentials von einer Sekundärzelle aus geschmolzenem Natrium nach Anspruch 1-7, wobei das Verfahren Folgendes umfasst:
Bereitstellen einer Sekundärzelle aus geschmolzenem Natrium, umfassend:
eine negative Elektrode aus Natriummetall, die elektrochemisch oxidiert, um während einer Entladung Natriumionen freizusetzen, und die während einer Wiederaufladung Natriumionen elektrochemisch zu Natriummetall reduziert;
einen positiven Elektrodenraum, umfassend eine positive Elektrode, die in einem geschmolzenen positiven Elektrolyten angeordnet ist, der aus NaFSA (Natrium-bis(fluorsulfonyl)amid) besteht, wobei die positive Elektrode eine Natriuminterkalationselektrode umfasst; und
eine Natriumion-leitende Elektrolytmembran, die die negative Natriummetallelektrode von dem geschmolzenen positiven Elektrolyten trennt; wobei die Natriumion-leitende Elektrolytmembran ein Material vom NaSICON-Typ umfasst; Erwärmen der negativen Natriummetallelektrode auf eine Temperatur, sodass die negative Natriummetallelektrode geschmolzen wird und mit der Natriumion-leitenden Elektrolytmembran in Kontakt ist, und sodass die negative Natriummetallelektrode oxidiert, um die Natriumionen freizusetzen und es der Zelle ermöglicht, Strom zu entladen; und
Aufrechterhalten der Temperatur der negativen Natriummetallelektrode zwischen 107 und 150 °C.

9. Verfahren nach Anspruch 8, ferner umfassend ein Aufrechterhalten der Temperatur der negativen Natriummetallelektrode zwischen 110 und 130 °C.

10. Verfahren nach Anspruch 7, ferner umfassend ein Wiederaufladen der Zelle, indem ein elektrisches Potential zwischen der negativen Natriummetallelektrode und der positiven Elektrode geleitet wird, um die negative Natriumelektrode zu veranlassen, Natriumionen elektrochemisch zu Natriummetall zu reduzieren.

11. Verfahren nach Anspruch 7, wobei die Natriuminterkalationselektrode NaₓMnO₂ umfasst, wobei x zwischen 0 und 4 ist.

12. Verfahren nach Anspruch 7, wobei die Natriuminterkalationselektrode NaₓCrO₂ umfasst, wobei x zwischen 0 und 4 ist.

13. Verfahren nach Anspruch 7, wobei die Natriuminterkalationselektrode NaₓNiO oder NaₓFe_{y}(PO₄)_{z} umfasst, wobei x zwischen 0 und 4 ist, y zwischen 0 und 4 ist und z zwischen 0 und 4 ist.

14. Verfahren nach Anspruch 7, wobei die Sekundärzelle aus geschmolzenem Natrium ferner ein Wärmemanagementsystem umfasst.

## Revendications

1. Cellule secondaire au sodium fondu, comprenant :
un compartiment d'électrode négative comprenant une électrode négative de sodium métallique, qui s'oxyde électrochimiquement pour libérer des ions sodium pendant la décharge et réduit électrochimiquement les ions sodium en sodium métallique pendant la recharge ;
un compartiment d'électrode positive comprenant une électrode positive disposée dans un électrolyte positif fondu constitué de NaFSA (bis(fluorosulfonyl)amide de sodium),
ladite électrode positive comprenant une électrode d'intercalation de sodium ; et
une membrane électrolytique conductrice des ions sodium qui sépare l'électrode négative de sodium métallique de l'électrolyte positif fondu,
ladite électrode négative de sodium métallique étant fondue et en contact avec la membrane électrolytique conductrice pendant que la cellule fonctionne ;
ladite membrane électrolytique conductrice des ions sodium comprenant un matériau de type NaSICON, et
ladite cellule fonctionnant à une température de fonctionnement comprise entre 107°C et 150°C.

2. Cellule secondaire selon la revendication 1,
ledit matériau de type NaSICON comprenant une membrane composite comportant une couche poreuse et une couche fonctionnelle dense.

3. Cellule secondaire selon l'une quelconque des revendications précédentes, ladite cellule fonctionnant lorsque la température de fonctionnement est comprise entre 110°C et 130°C.

4. Cellule secondaire selon l'une quelconque des revendications précédentes, ladite électrode d'intercalation de sodium comprenant du NaₓMnO₂ où x est compris entre 0 et 4, et/ou
ladite électrode d'intercalation de sodium comprenant du NaₓCrO₂ où x est compris entre 0 et 4.

5. Cellule secondaire selon l'une quelconque des revendications précédentes, ladite électrode d'intercalation de sodium comprenant du NaₓNiO ou du NaₓFe_{y}(PO₄)_{z}, où x est compris entre 0 et 4, y est compris entre 0 et 4, et z est compris entre 0 et 4.

6. Cellule secondaire selon l'une quelconque des revendications précédentes, comprenant en outre un système de gestion de chaleur pour réguler la température de fonctionnement de la cellule.

7. Cellule secondaire selon l'une quelconque des revendications précédentes, comprenant en outre un système de gestion de chaleur disposé dans le compartiment d'électrode négative pour réguler la température de fonctionnement du compartiment d'électrode négative, et/ou
comprenant en outre un système de gestion de chaleur disposé dans le compartiment d'électrode positive pour réguler la température de fonctionnement du compartiment d'électrode positive.

8. Procédé pour fournir un potentiel électrique à partir d'une cellule secondaire au sodium fondu selon les revendications 1 à 7, le procédé comprenant :
la fourniture d'une cellule secondaire au sodium fondu comprenant :
une électrode négative de sodium métallique, qui s'oxyde électrochimiquement pour libérer des ions sodium pendant la décharge et réduit électrochimiquement les ions sodium en sodium métallique pendant la recharge ;
un compartiment d'électrode positive comprenant une électrode positive disposée dans un électrolyte positif fondu constitué de NaFSA (bis(fluorosulfonyl)amide de sodium), ladite électrode positive comprenant une électrode d'intercalation de sodium ; et
une membrane électrolytique conductrice des ions sodium qui sépare l'électrode négative de sodium métallique de l'électrolyte positif fondu ; ladite membrane électrolytique conductrice d'ions sodium comprenant un matériau de type NaSICON ;
le chauffage de l'électrode négative de sodium métallique jusqu'à une certaine température de sorte que l'électrode négative de sodium métallique soit fondue et en contact avec la membrane électrolytique conductrice des ions sodium et de sorte que l'électrode négative de sodium métallique s'oxyde pour libérer les ions sodium et permettre à la cellule de décharger de l'électricité ; et
le maintien de la température de l'électrode négative de sodium métallique entre 107 et 150°C.

9. Procédé selon la revendication 8, comprenant en outre le maintien de la température de l'électrode négative de sodium métallique entre 110 et 130°C.

10. Procédé selon la revendication 7, comprenant en outre la recharge de la cellule en faisant passer un potentiel électrique entre l'électrode négative de sodium métallique et l'électrode positive pour inciter l'électrode négative de sodium à réduire électrochimiquement les ions sodium en sodium métallique.

11. Procédé selon la revendication 7, ladite électrode d'intercalation de sodium comprenant du NaₓMnO₂ où x est compris entre 0 et 4.

12. Procédé selon la revendication 7, ladite électrode d'intercalation de sodium comprenant du NaₓCrO₂ où x est compris entre 0 et 4.

13. Procédé selon la revendication 7, ladite électrode d'intercalation de sodium comprenant du NaₓNiO ou du NaₓFe_{y}(PO₄)_{z}, où x est compris entre 0 et 4, y est compris entre 0 et 4, et z est compris entre 0 et 4.

14. Procédé selon la revendication 7, ladite cellule secondaire au sodium fondu comprenant en outre un système de gestion de chaleur.
